# EUROPÄISCHE PATENTSCHRIFT

(11) **EP 1 770 020 B1**
(45) Veröffentlichungstag und Bekanntmachung des Hinweises auf die Patenterteilung: **01.07.2009**
(21) Anmeldenummer: 06019961.9
(22) Anmeldetag: 23.09.2006
(51) Int. Cl.: B65B 61/20

(54) **Vorrichtung und Verfahren zur Herstellung von Behälterverpackungen**
Device for and method of producing container packages
Dispositif et procédé pour produire des emballages de récipients

(30) Priorität: 28.09.2005 DE 10546246
(43) Veröffentlichungstag der Anmeldung: 04.04.2007
(73) Patentinhaber: KHS AG, 44143 Dortmund (DE)
(72) Erfinder: Jörissen, Michael, 47551 Bedburg-Hau (Moyland) (DE); Nitsch, Thomas, 47533 Kleve (Warbeyen) (DE); Brüker, Alexander, 47546 Kalkar (Niedermörmter) (DE); Düpper, Josef, 47551 Bedburg-Haus (DE)

(56) Entgegenhaltungen:
- EP-A- 0 086 712
- US-A- 2 968 898
- US-A- 5 485 713

## Beschreibung

Die Erfindung betrifft ein Verfahren zum Herstellen von Behälterverpackungen und zum Abpacken von Behältern in Behälterträger wie z.B. Umkartons sowie eine Vorrichtung zur Durchführung des Verfahrens.

Die Erfindung bezieht sich dabei als Ausführungsbeispiel auf Behälterverpackungen, die einen kastenförmigen Aufnahmebehälter aus einem Zuschnitt faltbaren Flachmaterials mit entsprechenden Seitenwänden aufweisen, wobei die Aufnahmebehälter oben offen sein können. Zudem haben diese Behälterverpackungen Trennwände aus einem weiteren Zuschnitt faltbaren Flachmaterials, welche herausgeklappt entsprechende Gefache oder Waben zum gegenseitigen Prall- und Transportschutz der zu verpackenden Behälter bilden. Dieser die Gefache oder Waben bildende Transportschutz der zu verpackenden Behälter kann auch aus mehreren, zusammengesteckten Zuschnitten bestehen.

Aus der DE 23 56 319 A1 ist ein Verfahren zum Öffnen zusammengeklappter Gefache und zum Einsetzen der geöffneten Gefache in Behälterverpackungen bekannt geworden, wobei das zusammengeklappte Gefache aufrechtstehend in eine erste Stellung gefördert, aus dieser mittels einer mit Saugkraft beaufschlagten Transportvorrichtung fortbewegt, dabei geöffnet und bis in eine zweite, über dem Behälter befindliche Stellung überführt, in dieser zweiten Stellung fixiert und schließlich in die geöffnete Behälterverpackung eingestoßen wird.
Während der Überführung der Gefache von der ersten in die zweite Stellung erfolgt das Öffnen desselben durch eine 90°-Schwenkung einer mit Saugkraft beaufschlagten Transportvorrichtung. Das geöffnete Gefache wird anschließend teilweise in eine Behälterverpackung eingesetzt und von einem vertikal bewegbaren Niederdrücker oder Stempel endgültig bis zum Boden der Behälterverpackung eingeschoben. Abgesehen von den erforderlichen mehrfachen Schritten zum Einsetzen und Einschieben eines Gefaches ist ein weiterer erheblicher Nachteil darin zu sehen, dass diese hintereinander folgenden Arbeitsschritte nur im diskontinuierlichen Betrieb der Maschine durchgeführt werden können.

In der DE 30 33 773 A1 wird hierzu unter anderem ein Verfahren zum Herstellen von Behälterträgern und zum Abpacken von Behältern in derartige Behälterträger dargestellt. Demnach sollen getrennt hergestellte, flache Zuschnitte für einen Behälterträger und für einen Trenneinsatz einer Verpackungsanlage zugeführt werden. Der vorkonfektionierte oder in der Verpackungsanlage konfektionierte Trenneinsatz wird zur Bildung von Gefachefeldern aufgefaltet und mit einer Behältergruppe zusammengebracht. Dabei wird der aufgefaltete Trenneinsatz von oben auf eine bereitgehaltene Behältergruppe aufgesteckt. In der Praxis wird das Verfahren so durchgeführt, dass Behältergruppen auf die Böden flachliegender Behälterträgerzuschnitte geschoben und anschließend die Gefache mit herausgefalteten Querstegen von oben zwischen die Reihen der Behältergruppen gesteckt werden. Anschließend werden die Seitenwände des Behälterträgerzuschnittes gegen die Längsseiten der Behälter geklappt. Ferner werden die stirnseitigen Verbindungslaschen der Mittelwände sowie Stirnwände der Behälterträgerzuschnitte gegen die Querseiten der Behälter geklappt und miteinander verklebt. Letzteres geschieht quer zur Transportrichtung.

Ferner sind Vorrichtungen bekannt, die dazu geeignet sind, die Zwischenlagen, Gefache oder Waben in flach zusammengelegtem Zustand nacheinander mittels der Greifvorrichtung einer Beschickungseinheit zu entnehmen, welche die Wabe in horizontaler Richtung transportiert, öffnet und anschließend einer Vertikalvorrichtung übergibt, mit der die geöffnete Wabe in einen Karton für Flaschen oder ähnliche Objekte eingesetzt werden kann. Solche Geräte haben den Nachteil, dass die im Allgemeinen aus Pappe bestehenden Waben bei der Übergabe von einer Vorrichtung zur anderen beschädigt werden können. Außerdem erfordert der gesamte Zyklus eine ziemlich lange Zeit zwischen dem Ergreifen der Wabe und dem Einsetzen in den Karton, da für den Transport zwischen der Vorrichtung für die horizontale Bewegung eine bestimmte Zeit erforderlich ist. Schließlich ist äußerste Sorgfalt erforderlich, um eine genaue Positionierung zwischen den Vorrichtungen für die Horizontal- und Vertikalbewegung sicherzustellen, da das Gerät sonst abgeschaltet werden muss.

Schließlich ist es bekannt, den Aufricht-, Umsetz- sowie Einsetzvorgang im kontinuierlichen Betrieb durchzuführen. Hierzu wird eine Vorrichtung zur Entnahme einer Trenneinlage oder eines Gefaches in flach zusammengelegtem Zustand und zum Öffnen und Einsetzen derselben in eine Behälterverpackung oder einen Karton eingesetzt, die eine Einzelgreifvorrichtung aufweist, mit der eine L-Förmige Bewegung mit gleichzeitiger Öffnung eines jeden Gefaches und ein unter Schwerkraft erfolgendes Absetzen in den Karton vorgenommen werden kann. Die endgültige untere Position der zwischen die Flaschen, Dosen und dergleichen positionierten Gefache wird anschließend mittels Vibrationseinrichtungen oder Rüttelstrecken erreicht. Ein Nachteil dieses Verfahrens ist in der unkontrollierten Übergabe eines Gefaches durch einfaches Fallenlassen zu sehen. Insbesondere bei hohen Leistungen kann es immer wieder zu Verkantungen der auf die Flaschenformationen hinab fallenden Gefache mit entsprechenden Maschinenstörungen kommen. Besonders häufig treten derartige Störungen in der Praxis dann auf, wenn die Gefache Behältergruppen zugeführt werden sollen, deren Behälter keinen ausgeprägten Hals-Bereich aufweisen, welche das Einführen der Gefache in der Regel begünstigt. Ausgeprägte Hals-Bereiche finden sich z.B. bei Weinflaschen, wodurch das Einführen besonders einfach und störungsfrei möglich ist. Im Gegensatz dazu gestaltet sich das Einführen von Gefachen in Gruppen von Getränkedosen, beispielsweise Bierdosen als besonders schwierig und störungsanfällig, da Dosen im Bereich ihres Deckels lediglich einen schmalen Rand (Bördelrand) aufweisen, welcher direkt in die senkrechte Außenwandung übergeht, und die Dosen innerhalb einer Behältergruppe auf Stoß, also Außenwandung an Außenwandung angeordnet sind, wodurch das Einführen zusätzlich erschwert wird.

Weiterhin sind auch Vorrichtungen bekannt geworden, welche das Einführen von Gefachen in Gruppen von Behältern weiter vereinfachen sollen.

So wurde mit der EP 0086712 eine Vorrichtung vorgestellt, bei welcher in mehreren Reihen angeordnete Behälter vor dem Einführen der Gefache auf Abstand zu einander gebracht werden. Dazu werden zwischen die einzelnen Reihen der Behälter keilförmige Elemente eingeführt, welche den Abstand der einzelnen Reihen erhöhen. Befinden sich die einzelnen Behälterreihen auf dem gewünschten Abstand zu einander, so rutschen die Gefache unkontrolliert in die zwischen den Behältern entstandenen Lücken. Nachteilig an einer derartigen Ausgestaltung ist, dass die Gefache nicht sicher bis zum Behälterboden geführt werden.

Ebenfalls bekannt wurde eine Vorrichtung nach der US 5,485,713. Auch diese Vorrichtung befasst sich mit dem Einbringen von Gefachen in eine aus mehreren Reihen bestehende Behältergruppe.
Dabei ist vorgesehen, dass das Einbringen der Gefache für jede Behälterreihe einzeln erfolgt. Zunächst wird eine erste Behälterreihe durch ein keilförmiges Element auf Anstand zur benachbarten Reihe gebracht. Anschließend wird ein erstes Gefache in diesen Abstand eingebracht. Anschließend wird eine zweite Behälterreiche auf Abstand zur folgenden Behälterreihe gebracht, worauf auch in den so entstandenen Abstand ein Gefache eingebracht wird. Diese Vorgehensweise wird so lange wiederholt, bis alle Behälterreihen mit Gefachen versehen sind. Die Gefache selbst werden über eine Art Kettenförderer oberhalb der Behälter vorpositioniert und dann fallengelassen, so dass die Gefache auch bei einer derartigen Vorrichtung nicht sicher bis zum Boden der Behälter gelangen.

Weiterhin wurde eine Vorrichtung nach der US 2,968,898 bekannt. Bei dieser Vorrichtung wird zwischen zwei Behälterreihen ein Anstandshalter angeordnet, wobei dieser Abstandshalter aus zwei voneinander beabstandeten Blechen besteht. Der Abstand dieser Bleche ist zumindest so groß gewählt, dass zwischen ihnen die einzuführenden Gefache frei bis zum Boden der Behälter fallen können. Die Gefache selbst werden mittels einer Schneidevorrichtung erzeugt, und fallen dann frei und im Wesentlichen ungeführt zum Behälterboden. Dieser Vorrichtung haftet der Nachteil an, dass sie ausschließlich für einfache, beispielsweise aus einem einzigen Stück bestehende Gefache eignet.

Zweck der vorliegenden Erfindung ist es, die vorgenannten Nachteile auszuschalten, demzufolge ein schnelles und störungsfreies Einführen der Gefache in eine Behältergruppe im kontinuierlichen Maschinenbetrieb zu ermöglichen.

Diese der Erfindung zugrunde legende Aufgabe wird durch die kennzeichnenden Merkmale des Verfahrens anspruches 1 sowie der Vorrichtungsansprüche gelöst.

Dazu ist erfindungsgemäß vorgesehen, die Gefache mittels spezieller Führungselemente gezielt zwischen die Behälter abzusenken.

Im Nachfolgenden wird die Erfindung anhand von Ausführungsbeispielen dargestellt. Im Einzelnen zeigen die
- Fig. 1: in einer Seitenansicht eine bekannte Vorrichtung zum Einführen von Gefachen in eine aus Behälterreihen bestehende Behältergruppe, die
- Fig. 2: eine Darstellung von Behältern (14) ohne ausgeprägten Halsbereich, die
- Fig. 3: verschiedene Phasen des Eintauchens von Gefachen (13) in eine Behältergruppe mit Blickrichtung entgegen der Transportrichtung, die
- Fig. 4: ebenfalls verschiedene Phasen des Eintauchens mit Blickrichtung quer zur Transportrichtung, und die
- Fig.5: eine weitere Ausbildung der vorliegenden Erfindung.

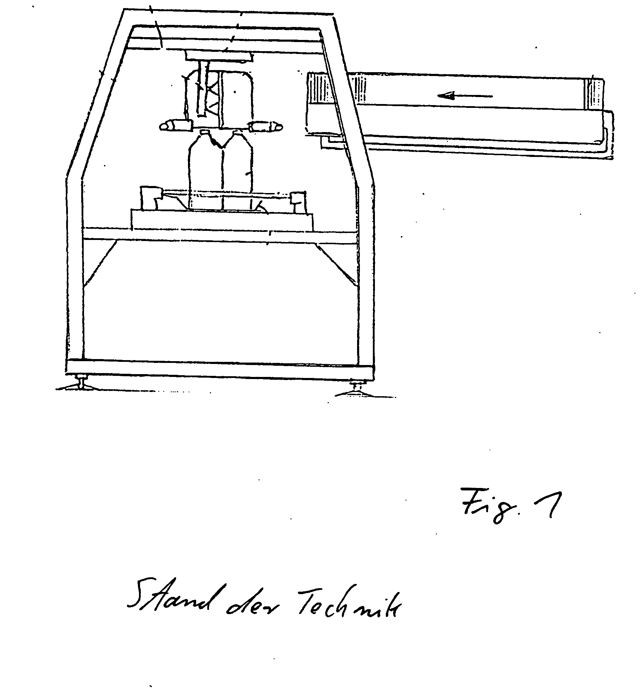

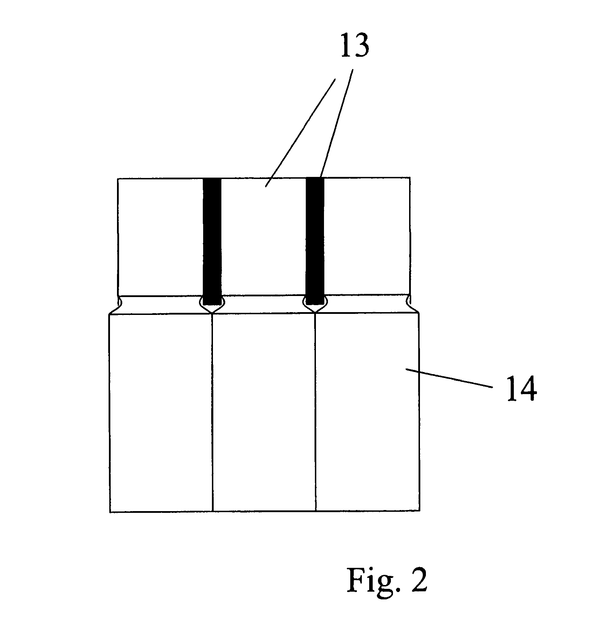

Bevor die Gefache 13 eine Behältergruppe zugeführt werden, muss diese zunächst von einem der Verpackungsmaschine zufließenden Behälterstrom gebildet werden. Die Behälter 14 werden der Verpackungsmaschine zunächst in breiter Spur und ungeordnet zugeführt. Innerhalb der Verpackungsmaschine werden die Behälter 14 zunächst in aus Geländern und/oder Trennblechen gebildete Gassen eingereiht, wodurch sich Behälterreihen ausbilden. Anschließend werden aus den Gassen die gewünschte Anzahl Behälter abgeteilt, wodurch die nachfolgend zu verpackende Behältergruppe gebildet wird. Dieser wird nachfolgend beispielsweise das Gefache zugeführt, worauf eine Verdichtung der Behälter, also eine Verminderung der zwischen den Behältern 14 vorhandenen räumlichen Abstände, und das eigentliche Verpacken erfolgen. Wie in der Figur 1 dargestellt, werden bei bekannten Vorrichtungen die flach liegenden Gefache aus dem Vorratsmagazin entnommen, geöffnet und in vorzugsweise horizontaler Ebene über die Bewegungsebene der Behältergruppe und/oder eines Umkartons bewegt und in dieser Position einer Gefachzentrier- und Absenkvorrichtung übergeben und anschließend von dieser beispielsweise auf der Behältergruppe abgesetzt, worauf die Gefache allein durch Schwerkraftwirkung in gewünschter Weise in die Behältergruppe eintauchen. Die sich dabei bei bekannten Vorrichtungen ergebenden Schwierigkeiten sind schematisch in der Figur 2 dargestellt. Es ist deutlich zu erkennen, dass das aus quer und längs angeordneten Zuschnitten bestehende Gefache 13 dann nicht auf einfache Weise zwischen die auf Stoß angeordneten Behälter 14, beispielsweise Dosen eingeführt werden kann, wenn diese Behälter 14 keinen ausgeprägten Halsbereich aufweisen.

Nachfolgend werden die in Förderrichtung gesehen hintereinander angeordneten Behälter als Reihe oder Behälterreihe bezeichnet.

Erfindungsgemäß ist nun vorgesehen, die einzelnen Reihen der Behälter im Bereich des Zuführens und Eintauchens der Gefache 13 in die Behältergruppe auf Abstand zu einander anzuordnen. Dazu wird zwischen den Behälterreihen eine in Förderrichtung verlaufende Führung angeordnet, welche sich entlang der Förderstrecke zumindest vom Beginn des Zuführen und/oder Aufsetzens des Gefaches zur bzw. auf die Behältergruppe bis zum hinreichenden Eintauchen des Gefaches in die Behältergruppe erstreckt. Ein einer ersten Ausgestaltung der vorliegenden Erfindung ist vorgesehen, die jeweils zwischen den Behälterreihen angeordneten Führungen 15 derart auszubilden, dass diese die in Förderrichtung angeordneten Bestandteile des einzuführenden Gefaches 13 beidseitig zumindest teilweise umschließen, aufnehmen und führen. Vorzugsweise bestehen die Führungen aus zwei Seitenelementen, welche auf Abstand zueinander angeordnet sind und somit eine schmale Führungsbahn oder Führungsgasse 16 für die Gefache bilden. Durch diese Vorgehensweise wird erreicht, dass die Gefache 13 unbehindert durch von außen auf sie einwirkende Querkräfte in die Behältergruppe eintauchen können. Bei bekannten Vorrichtungen werden diese Querkräfte z.B. durch den Staudruck unter den Behältern, die Behälterverdichtung oder aber auch durch unerwünschte Querbewegungen der Behälter hervorgerufen.

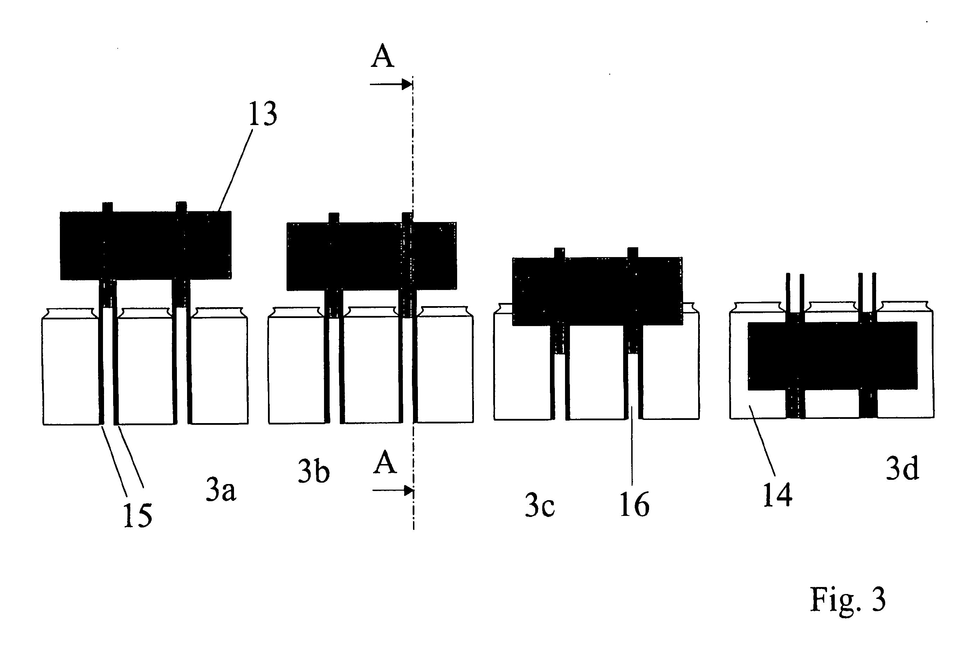

Ein derartiges Ausführungsbeispiel der Erfindung ist in der Figur 3 dargestellt, wobei sich die Gefache auf den Betrachter zu bewegen. Die einzelnen Teildarstellungen 3a, 3b, 3c und 3d zeigen einzelne Phasen es Eintauchens des Gefaches 13 in die Behältergruppe.

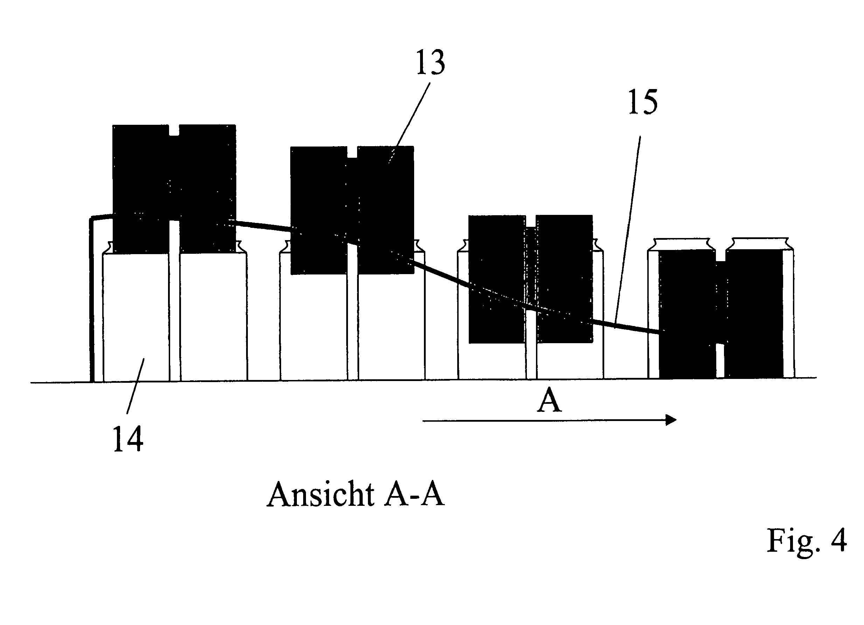

Die Figur 4 zeigt vergleichbare Phasen des Eintauchens der Gefache in einer Ansicht quer zur Förderrichtung A. Die Breite der Führungsgassen 16 ist so bemessen, dass die Gefache leicht und ohne zusätzliche Kraftwirkung in diese eintauchen können. Die Oberkanten der Führungen 15 bilden einen Anschlag für die Querstreben der Gefache 13, und wirken somit auf deren Abwärtsbewegung ein. Sind die Gefache 13 vollständig zumindest aber soweit in die Behältergruppe eingetaucht, dass das restliche Eintauchen problemlos erfolgen kann, enden die Führungen 15. Die Behälterreihen weisen nun einen solch großen Abstand zueinander auf, dass ein nachfolgendes Verdichten der Behältergruppe unabdingbar ist. Nach diesem Verdichten kann das entgültige Verpacken der Behältergruppe, beispielsweise mit einem durch Falten entstehenden Umkarton erfolgen. Oberhalb der Behältergruppen kann zusätzlich eine sich in Förderrichtung erstreckende Führung und/oder eine aktiv (Antrieb durch Motor) oder passiv (Antrieb durch das sich bewegende Produkt) mitlaufende Niederdruckeinheit angeordnet sein, welche die im Wesentlichen durch die Schwerkraft erfolgende Abwärtsbewegung der Gefache 13 dadurch unterstützt, dass die sich in Transportrichtung A fortbewegenden Gefache 13 an diese anstoßen, und somit weiter in die Behältergruppe gedrückt werden.

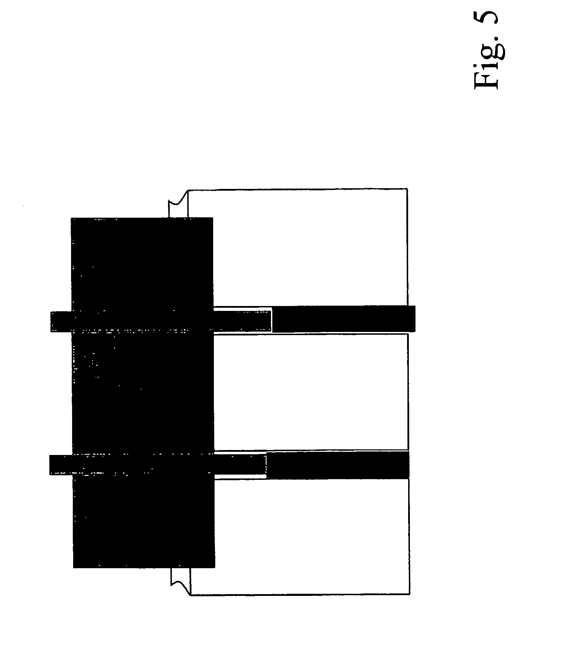

In einer zweiten Ausgestaltung der vorliegenden Erfindung ist vorgesehen, die Führungen 15 in einer vereinfachten Weise auszubilden. Ein entsprechendes Ausführungsbeispiel der vorliegenden Erfindung ist in der Figur 5 dargestellt. Es ist vorgesehen, die Führungen so auszubilden, dass diese keine Führungsgasse 16 für die Gefache 13 bilden, sondern vielmehr eine Führungsbahn 17, auf welcher die in Transportrichtung ausgerichteten Bestandteile der Gefache 13 zumindest teilweise aufliegen. Die Breite der Führungsbahn 13 ist vorzugsweise so bemessen, dass diese die Behälter 14 in einen solchen Abstand zueinander bringen, dass die Gefache 13 ohne merkliches Spiel in die Produktgruppe eintauchen können, so dass nach dem Entfernen der Führung 15 auf ein nachfolgendes Verdichten der Produktgruppe verzichtet werden kann.

Es versteht sich von selbst, dass die vorgestellte Erfindung auch bei Behältern mit ausgeprägtem Halsbereich Anwendung finden kann.

## Patentansprüche

1. Verfahren zum Herstellen von Behälterverpackungen und zum Abpacken von Behältern wie Flaschen, Dosen und dergleichen in Umkartons mit zwischen den Behältern einfügbaren Trenneinlagen oder Gefachen, die aus einem Vorratsmagazin entnehmbar und in die Zwischenräume einer Behältergruppe einsetzbar sind, wobei die Behälter innerhalb der Verpackungsmaschine in Reihen angeordnet sind, wobei die einzelnen Behälterreihen einer Behältergruppe zur Zuführung der Gefache (13) auf einen Mindestabstand zueinander gebracht werden, worauf die Gefache (13) der Behältergruppe zugeführt werden, worauf die in Transportrichtung ausgerichteten Bestandteile der Gefache (13) in den erzeugten Mindestabstand der Behälterreihen eintauchen, **dadurch gekennzeichnet, dass** die Eintauchbewegung der Gefache (13) nach ihrem Aufsetzen auf die Behältergruppe von den Oberkanten von Führungen (15) und von der Bewegung der Behältergruppen in die Förderrichtung A bestimmt wird.

2. Verfahren nach Anspruch 1, **dadurch gekennzeichnet, dass** auf das Eintauchen der Gefache (13) in die Behältergruppe eine Verdichtung der Behältergruppe erfolgt.

3. Vorrichtung zur Durchführung des Verfahrens nach den vorhergehenden Ansprüchen mit einer Förderebene zum Transport von Flaschen, Dosen und dergleichen Behälter (14), einer Vorrichtung zur Bereitstellung von Gefachen (13) und einer Vorrichtung zum Verbringen dieser in die Übergabeposition über die durch eine Verpackungsmaschine geförderten, aus Reihen bestehenden Behältergruppen, wobei die einzelnen Behälterreihen zumindest im Bereich der Zuführung der Gefache (13) zur Behältergruppe und /oder des Eintauchens der Gefache (13) in die Behältergruppe durch Führungen (15) zwischen den Behälterreihen zueinander mit einem Mindestabstand angeordnet sind, **dadurch gekennzeichnet, dass** die Führungen (15) an ihrer Oberkante eine geschlossene Oberfläche aufweisen, welche eine Führungsbahn (17) für die Gefache (13) bildet, wobei (15) in Transportrichtung auftretende Höhenänderungen der Oberkanten der Führungen (15) die Eintauchbewegung der Gefache (13) bestimmen.

4. Vorrichtung nach Anspruch 3, **dadurch gekennzeichnet, dass** der Mindestabstand der Behälterreihen zumindest der Materialdicke der Gefache (13) entspricht.

5. Vorrichtung nach Anspruch 4, **dadurch gekennzeichnet, dass** die Breite der Führung (15) im Wesentlichen dem Mindestabstand der Behälterreihen entspricht.

6. Vorrichtung nach einem der vorhergehenden Ansprüche 3 bis 5, **dadurch gekennzeichnet, dass** die Führungen (15) einen Hohlraum aufweisen, welcher die Gefache (13) zumindest teilweise aufnimmt.

7. Vorrichtung nach einem der vorhergehenden Ansprüche 5 bis 6, **dadurch gekennzeichnet, dass** sich die Führungen (15) entlang der Förderstrecke zumindest vom Beginn des Zuführen und/oder Aufsetzens des Gefaches (13) zur bzw. auf die Behältergruppe bis zum hinreichenden Eintauchen des Gefaches (13) in die Behältergruppe erstrecken.

## Claims

1. Method for producing container packages and for packing containers such as bottles, cans and the like in covering boxes, having separating inserts or partition inserts, which can be fitted in between the containers, and which are removable from a dispensing hopper and are insertable into the intermediate spaces in a group of containers, wherein the containers are arranged in rows within the packaging machine, wherein the individual container rows of a group of containers are moved to a minimum spacing one relative to another for delivery of the partition inserts (13), whereupon the partition inserts (13) are supplied to the group of containers, whereupon the component parts of the partition inserts (13), aligned in the direction of transport, are inserted into the minimum spaces created between the container rows, **characterized in that** the insertion movement of the partition inserts (13) after they have been placed onto the group of containers, is determined by the upper edges of guides (15) and by the movement of the groups of containers in the conveying direction A.

2. Method according to Claim 1, **characterized in that** a compacting of the group of containers is effected after the insertion of the partition inserts (13) into the group of containers.

3. Device for accomplishing the method according to the preceding claims, said device having a conveyor plane for conveying the bottles, cans and the like containers (14), a device for supplying partition inserts (13) and a device for moving said partition inserts into the transfer position above a group of containers, which are conveyed through a packaging machine and comprise rows, wherein the individual container rows are arranged at a minimum spacing relative to one another by means of guides (15) at least in the region of the supplying of the partition inserts (13) to the group of containers and/or of the insertion of the partition inserts (13) into the group of containers, **characterized in that** the guides (15) have a closed surface on their upper edge, said closed surface forming a guide path (17) for the partition inserts (13), wherein changes in height in the upper edges of the guides (15), occurring in the conveying direction, determine the insertion movement of the partition inserts (13) between the container rows.

4. Device according to Claim 3, **characterized in that** the minimum spacing between the container rows corresponds at least to the material thickness of the partition inserts (13).

5. Device according to Claim 4, **characterized in that** the width of the guide (15) corresponds substantially to the minimum spacing between the container rows.

6. Device according to one of preceding Claims 3 to 5, **characterized in that** the guides (15) have a hollow portion, which at least partially accommodates the partition inserts (13).

7. Device according to one of preceding Claims 5 to 6, **characterized in that** the guides (15) extend along the conveying section at least from the start of the supplying of the partition insert (13) to and/or of the placing of the partition insert (13) onto the group of containers as far as up to the sufficient insertion of the partition insert (13) into the group of containers.

## Revendications

1. Procédé pour produire des emballages de récipients et pour emballer des récipients tels que des bouteilles, des boîtes et similaires dans des cartons avec des couches intermédiaires de séparation ou des casiers, pouvant être insérés entre les récipients qui peuvent être retirés d'un magasin de stockage et insérés dans les espaces intermédiaires d'un groupe de récipients, les récipients étant disposés dans la machine d'emballage en rangées, les rangées de récipients individuelles d'un groupe de récipients étant amenées pour l'alimentation des casiers (13) à une distance minimale les unes par rapport aux autres, puis les casiers (13) étant amenés au groupe de récipients, et ensuite les constituants des casiers (13) alignés dans le sens de transport s'enfonçant dans la distance minimale générée des rangées de récipients, **caractérisé en ce que** le mouvement d'enfoncement des casiers (13) est déterminé après leur placement sur le groupe de récipients par les arêtes supérieures de guidages (15) et par le mouvement des groupes de récipients dans le sens de transport A.

2. Procédé selon la revendication 1, **caractérisé en ce qu'**une compression du groupe de récipients est effectuée à la suite de l'enfoncement des casiers (13) dans le groupe de récipients.

3. Dispositif pour la mise en oeuvre du procédé selon les revendications précédentes avec un plan de transport pour le transport de bouteilles, de boîtes et récipients similaires (14), un dispositif de mise à disposition de casiers (13) et un dispositif pour amener ceux-ci dans la position de transfert au-dessus des groupes de récipients constitués de rangées, transportés par une machine d'emballage, les rangées de récipients individuelles étant disposées au moins dans la zone d'amenée des casiers (13) au groupe de récipients et/ou d'enfoncement des casiers (13) dans le groupe de récipients par des guidages (15) entre les rangées de récipients à une distance minimale les uns par rapport aux autres, **caractérisé en ce que** les guidages (15) présentent sur leur arête supérieure une surface fermée qui forme une voie de guidage (17) pour les casiers (13), des modifications de hauteur, survenant dans le sens de transport, des arêtes supérieures des guidages (15) déterminant le mouvement d'enfoncement des casiers (13).

4. Dispositif selon la revendication 3, **caractérisé en ce que** la distance minimale des rangées de récipients correspond au moins à l'épaisseur de matière des casiers (13).

5. Dispositif selon la revendication 4, **caractérisé en ce que** la largeur des guidages (15) correspond sensiblement à la distance minimale des rangées de récipients.

6. Dispositif selon l'une des revendications précédentes 3 à 5, **caractérisé en ce que** les guidages (15) présentent une cavité qui reçoit au moins partiellement les casiers (13).

7. Dispositif selon l'une des revendications précédentes 5 à 6, **caractérisé en ce que** les guidages (15) s'étendent le long du parcours de transport au moins du début de l'amenée et/ou du placement du casier (13) vers ou sur le groupe de récipients, jusqu'à l'enfoncement suffisant du casier (13) dans le groupe de récipients.
